Europäisches Patentamt

European Patent Office

Office européen des brevets

(19)

(11) **EP 0 863 846 B1**

(12) **FASCICULE DE BREVET EUROPEEN**

(45) Date de publication et mention
de la délivrance du brevet:
**04.12.2002 Bulletin 2002/49**

(21) Numéro de dépôt: **96924030.8**

(22) Date de dépôt: **28.06.1996**

(51) Int Cl.[7]: **C01G 25/00**

(86) Numéro de dépôt international:
**PCT/FR96/01003**

(87) Numéro de publication internationale:
**WO 97/002213 (23.01.1997 Gazette 1997/05)**

(54) **COMPOSITION A BASE D'OXYDE DE ZIRCONIUM ET D'OXYDE DE CERIUM, PROCEDE DE PREPARATION ET UTILISATION**

ZUSAMMENSETZUNG AUF DER BASIS VON ZIRKON UND CEROXID, VERFAHREN ZU SEINER HERSTELLUNG UND SEINE VERWENDUNG

COMPOSITION BASED ON ZIRCONIUM OXIDE AND CERIUM OXIDE, PREPARATION METHOD THEREFOR AND USE THEREOF

(84) Etats contractants désignés:
**AT BE DE ES FR GB IT SE**

(30) Priorité: **03.07.1995 FR 9507979**

(43) Date de publication de la demande:
**16.09.1998 Bulletin 1998/38**

(73) Titulaire: **RHODIA CHIMIE**
**92408 Courbevoie Cédex (FR)**

(72) Inventeurs:
- **AUBERT, Maryline**
  **F-17540 Angliers (FR)**
- **BIRCHEM, Thierry**
  **F-75013 Paris (FR)**
- **BLANCHARD, Gilbert**
  **F-60330 Le Plessis-Belleville (FR)**

- **TOURET, Olivier**
  **F-17000 La Rochelle (FR)**

(74) Mandataire: **Dubruc, Philippe et al**
**Rhodia Services,**
**Direction de la Propriété Industrielle,**
**40, rue de la Haie-Coq**
**93306 Aubervilliers Cedex (FR)**

(56) Documents cités:
**EP-A- 0 605 274        EP-A- 0 629 438**
**WO-A-95/18068          FR-A- 2 590 887**
**FR-A- 2 701 471**

- **DATABASE WPI Week 9215 Derwent Publications Ltd., London, GB; AN 92-118001 XP002014691 & JP,A,04 055 315 (DAINICHISEIKA COLOR CHEM ET AL) , 24 Février 1992**

## Description

La présente invention concerne une composition à base d'oxyde de zirconium et d'oxyde de cérium, son procédé de préparation et son utilisation, notamment en catalyse.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). L'oxyde de zirconium et l'oxyde de cérium apparaissent aujourd'hui comme deux constituants particulièrement importants et intéressants pour ce type de catalyseurs. Pour être efficaces, ces catalyseurs doivent présenter une surface spécifique importante même à température élevée. Par ailleurs, il est souvent intéressant d'utiliser ces catalyseurs sous forme d'oxydes mixtes ou de solutions solides.

FR-A-2590887 décrit un oxyde de zirconium dont la surface spécifique peut être stabilisée par du cérium notamment. Toutefois ce document n'est pas concerné par le problème de la stabilisation de la phase d'oxyde de zirconium. En fait, compte tenu notamment des procédés de préparation décrits dans cette référence, le chauffage du produit à 900°C ou à 1000°C amène une démixtion, c'est à dire l'apparition d'une ou de plusieurs phases parasites.

FR-A-2701471 décrit des compositions qui présentent une surface de l'ordre de 20 à 25 m$^2$/g quand elles sont à base de zirconium et de cérium seulement et de l'ordre de 40m$^2$/g quand elles comprennent un dopant. Ces compostions ne sont pas stables en ce qui concerne leur phase, c'est à dire qu'un chauffage à 1000°C conduit à une démixtion.

EP-A-629438 est aussi essentiellement concerné par la stabilisation de la surface spécifique et la capacité de stockage d'oxygène de compositions à base de cérium, de zirconium et d'un additif spécifique qui est le hafnium. On ne trouve aucun enseignement dans ce document pour obtenir des produits qui combinent une surface élevée et un stabilité de la structure et qui soient à base de zirconium dans lequel l'oxyde de cérium est en solution solide.

Il existe donc un besoin en catalyseurs susceptibles de pouvoir être utilisés à température élevée et, pour cela, présentant une grande stabilité de leur surface spécifique et qui soient aussi sous forme de solutions solides.

L'objet de l'invention est donc la mise au point d'une composition catalytique pouvant répondre à ce besoin.

Dans ce but, la composition de l'invention consiste essentiellement en oxyde de zirconium et en oxyde de cérium et elle est caractérisée en ce qu'après calcination 6 heures à 1000°C, elle possède une surface spécifique supérieure à 25m$^2$/g et elle se présente sous la forme d'une solution solide pure de l'oxyde de cérium dans l'oxyde de zirconium.

Par ailleurs, selon un autre mode de réalisation de l'invention, la composition est à base d'oxyde de zirconium et elle comprend de l'oxyde de cérium et au moins un élément dopant et elle est caractérisée en ce qu'après calcination 6 heures à 1000°C, elle possède une surface spécifique d'au moins 25m$^2$/g et elle se présente sous la forme d'une solution solide pure de l'oxyde de cérium et du dopant dans l'oxyde de zirconium.

L'invention concerne aussi un procédé de préparation des compositions précédentes qui est caractérisé en ce qu'il comprend les étapes suivantes :

- on prépare un mélange en milieu liquide contenant un composé du zirconium et un composé du cérium IV;
- on chauffe ledit mélange à une température supérieure à 100°C;
- on amène le milieu réactionnel obtenu à l'issue du chauffage à un pH basique;
- on effectue un mûrissement à une température d'au moins 100°C soit du milieu réactionnel précité, soit d'une suspension obtenue après remise dans l'eau du précipité issu dudit milieu réactionnel, le mûrissement étant effectué à un pH supérieur à 8;
- on récupère le précipité ainsi obtenu à l'issue du mûrissement;
- on calcine ledit précipité;

l'élément dopant précité étant, le cas échéant, ajouté soit au mélange en milieu liquide de départ soit au mélange réactionnel obtenu à l'issue du chauffage.

Selon une autre variante de l'invention, le procédé de préparation est caractérisé en ce qu'il comprend les étapes suivantes :

- on prépare un mélange en milieu liquide contenant un composé du cérium et au moins un oxychlorure de zirconium et, le cas échéant, un composé de l'élément dopant;
- on met en présence ledit mélange et un composé basique, ce par quoi on fait précipiter le mélange;
- on effectue un mûrissement à une température d'au moins 100°C soit du milieu réactionnel obtenu à l'étape précédente, soit d'une suspension obtenue après remise dans l'eau du précipité issu dudit milieu réactionnel;
- on récupère le précipité ainsi obtenu à l'issue du mûrissement;
- on calcine ledit précipité.

D'autres caractéristiques, détails et avantages de l'invention apparaîtront encore plus complètement à la lecture de la description qui va suivre.

Les compositions de l'invention sont à base d'oxyde de zirconium. Elles comprennent en outre de l'oxyde de cérium.

Comme indiqué plus haut, la composition selon le premier mode de réalisation de l'invention est caractérisée en ce qu'elle possède une surface spécifique d'au moins 25m$^2$/g après calcination 6 heures à 1000°C et en ce qu'elle se présente sous la forme d'une solution solide pure de l'oxyde de cérium dans l'oxyde de zirconium.

On entend ici et pour le reste de la description, par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Sodety, 60, 309 (1938)".

L'autre caractéristique des compositions selon ce premier mode de réalisation est le fait qu'elles se présentent sous la forme d'une solution solide pure de l'oxyde de cérium dans l'oxyde de zirconium.

On entend par là que le cérium est présent totalement en solution solide dans le zirconium. Les spectres en diffraction RX de ces compositions révèlent en particulier, au sein de ces dernières, l'existence d'une phase unique clairement identifiable et correspondant à celle d'un oxyde de zirconium cristallisé dans le système cubique ou quadratique, traduisant ainsi l'incorporation du cérium dans le réseau cristallin de l'oxyde de zirconium, et donc l'obtention d'une solution solide vraie.

Selon un second mode de réalisation de l'invention, la composition contient en outre un élément dopant. Cet élément dopant peut être choisi, seul ou en mélange, parmi les terres rares; les alcalino-terreux; l'aluminium; le thorium; le scandium; le gallium; le titane; le niobium; le tantale.

Par terre rare on entend les éléments du groupe constitué par l'yttrium et les éléments de la classification périodique de numéro atomique compris inclusivement entre 57 et 71. On peut mentionner plus particulièrement l'yttrium, le lanthane, le néodyme, le praséodyme, l'europium et le samarium.

Pour les alcalino-terreux, on peut citer plus particulièrement le magnésium, le calcium et le baryum.

Les compositions de ce mode de réalisation possèdent une surface d'au moins 25m$^2$/g après calcination 6 heures à 1000°C. Cette surface peut être plus particulièrement d'au moins 30m$^2$/g. Dans certains cas, cette surface peut atteindre au moins 40m$^2$/g et dépasser 45m$^2$/g.

Ces mêmes compositions peuvent posséder par ailleurs une surface spécifique d'au moins 50m$^2$/g, plus particulièrement d'au moins 60m$^2$/g après calcination 6 heures à 900°C.

Les compositions comprenant un dopant se présentent sous la forme d'une solution solide de l'oxyde de cérium et du dopant dans l'oxyde de zirconium.

Les spectres de diffraction RX de ces compositions sont du même type que ceux décrits plus haut.

Dans le cas des compositions comprenant comme dopant au moins le lanthane, celles-ci peuvent présenter une surface spécifique après calcination 6 heures à 1100°C d'au moins 5m$^2$/g, plus particulièrement d'au moins 10m$^2$/g.

Exprimé sous forme d'oxydes, ici et pour l'ensemble de la description sauf indication contraire, les compositions selon l'invention contiennent généralement au moins 40% en poids de zirconium et au plus 60% en poids de cérium. Plus particulièrement, elles peuvent présenter un rapport atomique Zr/Ce égal ou supérieur à 1 , c'est à dire des teneurs égales ou supérieures à 42% en poids de zirconium et égales ou inférieures à 58% en poids de cérium. Selon un autre mode de réalisation, les compositions selon l'invention contiennent au moins 51% en poids de zirconium et au plus 49% en poids de cérium. Ces proportions, selon des modes de réalisation encore plus particuliers de l'invention, peuvent être plus précisément d'au moins 55% en poids de zirconium et d'au plus 45% en poids de cérium et encore plus particulièrement d'au moins 65% en poids de zirconium et d'au plus 35% en poids de cérium.

Selon d'autres modes de réalisation de l'invention, la proportion en cérium peut être d'au plus 30% et plus particulièrement d'au plus 20%.

La teneur minimale en cérium est de préférence d'au moins 1%, plus particulièrement supérieure à 10% et encore plus particulièrement d'au moins 15%.

Lorsque les compositions de l'invention contiennent en outre un élément dopant, la teneur en cet élément, toujours exprimée sous forme oxyde, peut être comprise entre 0,1 et 50% en poids, notamment entre 0,1 et 45% en poids, plus particulièrement entre 0,1 et 20% en poids et de préférence entre 1 et 10% en poids, par rapport à l'ensemble de la composition.

Enfin, on notera que les compositions de l'invention peuvent comprendre en outre de l'hafnium. L'hafnium est un élément présent avec le zirconium dans les sources de zirconium disponibles actuellement. En fonction de la nature de cette source notamment, la teneur en hafnium exprimée en oxyde peut varier entre 0,01 et 25% par rapport à l'ensemble de la composition.

Les procédés de préparation des compositions de l'invention vont maintenant être décrits.

Il existe deux variantes de procédé. La première variante concerne un procédé de thermohydrolyse, la deuxième variante un procédé de coprécipitation. La première variante va être décrite ci-dessous.

Selon cette première variante, la première étape du procédé consiste à préparer un mélange en milieu liquide d'un composé du zirconium et d'un composé du cérium IV et, le cas échéant, de l'élément dopant. Les différents composés du mélange sont présents dans les proportions stoechiométriques nécessaires pour obtenir la composition finale désirée.

Le milieu liquide est généralement l'eau.

Les composés sont de préférence des composés solubles. Ce peut être notamment des sels de zirconium et de cérium.

Le mélange peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Les composés du zirconium peuvent être choisis parmi le sulfate de zirconium, le nitrate de zirconyle ou le chlorure de zirconyle. Le nitrate de zirconyle est utilisé le plus généralement. Le chlorure de zirconyle convient particulièrement bien pour obtenir les produits de surfaces les plus élevées.

Dans le cas de la préparation de compositions comprenant en outre un élément dopant, celui-ci est habituellement apporté sous forme d'un sel par exemple sous forme de nitrate. L'introduction sous la forme d'un sol n'est pas exclue, lorsqu'un tel type de sol existe.

A titre de composés solubles dans l'eau du cérium, on peut citer notamment les sels de cérium IV tels que nitrates ou nitrates céri-ammoniacal par exemple, qui conviennent ici particulièrement bien. De préférence, on utilise du nitrate cérique. Il est avantageux d'utiliser des sels de pureté d'au moins 99,5 et plus particulièrement d'au moins 99,9%. La solution de sels de cérium IV peut contenir sans inconvénient du cérium à l'état céreux mais il est souhaitable qu'elle contienne au moins 85% de cérium IV. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également, de préférence, utiliser une solution de nitrate cérique obtenue selon le procédé d'oxydation électrolytique d'une solution de nitrate céreux tel que décrit dans le document FR-A- 2 570 087, et qui constitue ici une matière première intéressante.

On notera ici que les solutions aqueuses de sels de cérium IV et de sels de zirconyle peuvent présenter une certaine acidité libre initiale. Selon la présente invention, il est autant possible de mettre en oeuvre une solution initiale de sels de cérium IV et de zirconium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque. On peut alors définir de manière pratique un taux de neutralisation (r) de la solution initiale de cérium et de zirconium par l'équation suivante :

$$r = \frac{n3-n2}{n1}$$

dans laquelle n1 représente le nombre total de moles de Ce IV et de zirconium présentes dans la solution après neutralisation; n2 représente le nombre de moles d'ions OH⁻ effectivement nécessaires pour neutraliser l'acidité libre initiale apportée par les solutions aqueuses de sel de cérium IV et de zirconium; et n3 représente le nombre total de moles d'ions OH⁻ apportées par l'addition de la base. Lorsque la variante "neutralisation" est mise en oeuvre, on utilise dans tous les cas une quantité de base qui doit être impérativement inférieure à la quantité de base qui serait nécessaire pour obtenir la précipitation totale des espèces hydroxydes cérium zirconium, cette quantité dépendant de la composition synthétisée. Dans la pratique, on se limite ainsi à des taux de neutralisation n'excédant pas 2.

Le mélange initial étant ainsi obtenu, on procède ensuite, conformément à la deuxième étape du procédé selon l'invention, à son chauffage.

La température à laquelle est mené ce traitement thermique, aussi appelé thermohydrolyse, est supérieure à 100°C. Elle peut ainsi être comprise entre 100°C et la température critique du milieu réactionnel, en particulier entre 100 et 350°C, de préférence entre 100 et 200°C.

L'opération de chauffage peut être conduite en introduisant le milieu liquide contenant les espèces précitées dans une enceinte close (réacteur fermé du type autoclave), la pression nécessaire ne résultant alors que du seul chauffage du milieu réactionnel (pression autogène). Dans les conditions de températures données ci-dessus, et en milieux aqueux, on peut ainsi préciser, à titre illustratif, que la pression dans le réacteur fermé peut varier entre une valeur supérieure à 1 Bar ($10^5$ Pa) et 165 Bar ($1,65 . 10^7$ Pa), de préférence entre 5 Bar ($5. 10^5$ Pa) et 165 Bar ($1,65 . 10^7$ Pa). Il est bien entendu également possible d'exercer une pression extérieure qui s'ajoute alors à celle consécutive au chauffage.

On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du traitement n'est pas critique, et peut ainsi varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

A l'issue de cette deuxième étape, on amène le milieu réactionnel ainsi obtenu à un pH basique. Cette opération est effectuée en ajoutant au milieu une base telle que par exemple une solution d'ammoniaque.

Par pH basique on entend une valeur du pH supérieure à 7 et de préférence supérieure à 8.

Bien que cette variante ne soit pas préférée, il est possible d'introduire au mélange réactionnel obtenu à l'issue du chauffage, notamment au moment de l'addition de la base, le ou les éléments dopants notamment sous la forme qui a été décrite plus haut.

A l'issue de l'étape de chauffage, on récupère un précipité solide qui peut être séparé de son milieu par toute technique classique de séparation solide-liquide telle que par exemple filtration, décantation, essorage ou centrifugation .

Le produit tel que récupéré peut ensuite être soumis à des lavages, qui sont alors opérés à l'eau ou éventuellement avec une solution basique, par exemple une solution d'ammoniaque. Le lavage peut être effectué par remise en suspension dans l'eau du précipité et maintien de la suspension ainsi obtenue à une température qui peut aller jusqu'à 100°C. Pour éliminer l'eau résiduelle, le produit lavé peut éventuellement être séché, par exemple à l'étuve ou par atomisation, et ceci à une température qui peut varier entre 80 et 300°C, de préférence entre 100 et 200°C.

Selon une caractéristique de l'invention, le procédé comprend un mûrissement.

Ce mûrissement peut s'effectuer directement sur le milieu réactionnel obtenu après addition d'une base pour se trouver en pH basique. Comme l'addition d'une base a pour effet de refroidir le milieu réactionnel, le mûrissement se fait en chauffant de nouveau celui-ci. La température à laquelle est chauffé le milieu est d'au moins 40°C, plus particulièrement d'au moins 60°C et encore plus particulièrement d'au moins 100°C. Le milieu est maintenu ainsi à une température constante pendant une durée qui est habituellement d'au moins 30 minutes et plus particulièrement d'au moins 1 heure. Le mûrissement peut se faire à la pression atmosphérique ou éventuellement à une pression plus élevée.

Le mûrissement peut aussi s'effectuer sur une suspension obtenue après remise dans l'eau du précipité. On peut ajuster le pH de cette suspension à une valeur supérieure à 7 et de préférence supérieure à 8.

Il est possible de faire plusieurs mûrissements. Ainsi, on peut remettre en suspension dans l'eau, le précipité obtenu après l'étape de mûrissement et éventuellement un lavage puis effectuer un autre mûrissement du milieu ainsi obtenu. Cet autre mûrissement se fait dans les mêmes conditions que celles qui ont été décrites pour le premier. Bien entendu, cette opération peut être répétée plusieurs fois.

Dans une dernière étape du procédé selon l'invention, le précipité récupéré, après éventuellement lavage et/ou séchage, peut ensuite être calciné. Cette calcination permet de développer la cristallinité de la solution solide formée, et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère controlée (oxydante ou réductrice) n'est bien évidemment pas exclue.

En pratique, on limite généralement la température de calcination à un intervalle de valeurs comprises entre 300 et 1000°C.

Même après des calcinations à températures élevées, c'est à dire en particulier des températures supérieures à celles qui sont strictement nécessaires pour mettre clairement en évidence par rayons X la formation de la solution solide désirée, les compositions selon l'invention conservent des surfaces spécifiques tout à fait acceptables.

On peut procéder à une calcination en deux temps. Une première calcination peut être faite à température relativement faible, par exemple à 300-400°C, et une seconde à température plus élevée, par exemple à 500-800°C. Cette calcination en deux temps peut être conduite dans un même four comprenant des zones de chauffe différenciées.

La deuxième variante du procédé va maintenant être décrite.

La première étape de cette variante consiste à préparer un mélange comprenant un composé de cérium, de l'oxychlorure de zirconium ($ZrOCl_2$) et un composé de l'élément dopant.

Le composé de cérium peut être un composé de cérium III ou de cérium IV. Les composés sont de préférence des composés solubles. Ce qui a été dit plus haut sur les composés de cérium et notamment de cérium IV et de l'élément dopant s'applique aussi ici. De préférence, on utilise un composé de cérium IV, un tel composé conduisant aux produits de surface les plus élevées. Les différent composés du mélange sont présents dans les proportions stoechiométriques nécessaires pour obtenir la composition finale désirée.

Dans une deuxième étape, on met en présence ledit mélange avec un composé basique. On peut utiliser comme base ou composé basique les produits du type hydroxyde ou carbonate. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. L'ordre d'introduction des réactifs peut être quelconque, le composé basique pouvant être introduit dans le mélange ou inversement ou encore les réactifs pouvant être introduits simultanément dans le réacteur.

L'addition peut être effectuée en une seule fois, graduellement ou en continu, et elle est de préférence réalisée sous agitation. Cette opération peut être conduite à une température comprise entre la température ambiante (18 - 25°C) et la température de reflux du milieu réactionnel, cette dernière pouvant atteindre 120°C par exemple. Elle est de préférence conduite à température ambiante.

On peut noter qu'il est possible, notamment dans le cas d'un procédé utilisant un composé de cérium III, d'ajouter soit au mélange de départ, soit lors de l'introduction du composé basique un agent oxydant tel que l'eau oxygénée.

A la fin de l'addition de la solution basique, on peut éventuellement maintenir encore le milieu de réaction sous agitation pendant quelque temps, et ceci afin de parfaire la précipitation.

A ce stade du procédé, on effectue un mûrissement. Celui-ci peut être réalisé directement sur le milieu réactionnel obtenu après addition du composé basique ou sur une suspension obtenue après remise dans l'eau du précipité. Le mûrissement se fait en chauffant le milieu. La température à laquelle est chauffé le milieu est d'au moins 40°C, plus particulièrement d'au moins 60°C et encore plus particulièrement d'au moins 100°C. Le milieu est maintenu ainsi à une température constante pendant une durée qui est habituellement d'au moins 30 minutes et plus particulièrement d'au moins 1 heure. Le mûrissement peut se faire à la pression atmosphérique ou éventuellement à une pression plus élevée.

A l'issue de l'étape de précipitation, on récupère une masse d'un précipité solide qui peut être séparé de son milieu par toute technique classique.

Les étapes de lavage et de calcination sont ensuite conduites de la même façon que celle décrite pour le premier mode de réalisation.

Les compositions de l'invention telles que décrites plus haut ou telles qu'obtenues dans les procédés mentionnés précédemment se présentent sous forme de poudres mais elles peuvent éventuellement être mises en forme pour se présenter sous forme de granulés, billes, cylindres ou nids d'abeille de dimensions variables. Ces compositions peuvent être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins. Les compositions peuvent aussi être utilisées dans des systèmes catalytiques comprenant un revêtement (wash coat) à propriétés catalytiques et à base de ces compositions, sur un substrat du type par 'exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisable dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion.

Dans le cas de ces utilisations en catalyse, les compositions de l'invention sont employées en combinaison avec des métaux précieux. La nature de ces métaux et les techniques d'incorporation de ceux-ci dans ces compositions sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante.

De ce fait, l'invention concerne aussi l'utilisation d'une composition ou d'un système catalytique tels que décrits plus haut à la fabrication de catalyseur pour post combustion automobile.

Enfin, les compositions de l'invention peuvent être utilisées dans la préparation de céramiques.

Des exemples concrets mais non limitatifs vont maintenant être donnés.

<u>EXEMPLE 1</u>

A une solution de nitrate de CeIV, on ajoute une solution de chlorure de zirconyle (obtenu par dissolution du sel cristallisé) dans les proportions respectives en poids d'oxyde de 20/80 et tel que le rapport r soit de 0,07. La concentration est ajustée à 80 g/l, puis la solution est portée 6 heures à 150°C. Après refroidissement, le pH du milieu réactionnel est amené à une valeur de 8,5 à l'aide d'une solution ammoniacale. La température est ensuite portée à 100°C. Après refroidissement, on élimine par décantation les eaux-mères et on ajoute une quantité équivalente d'eau. Le milieu réactionnel est de nouveau porté à 100°C. Après refroidissement, le produit est filtré.

Après calcination 6 heures à 900°C et 1000°C, les surface spécifiques des oxydes sont respectivement de 40 et 29 m$^2$/g.

L'analyse en diffraction RX montre que l'oxyde obtenu est sous la forme d'une phase pure solution solide.

EXEMPLE 2

La solution de départ est constituée d'un mélange de nitrate de cérium IV, de nitrate de zirconyle et de nitrate de lanthane dans des proportions respectives en poids d'oxyde de 19/76/5% (rapport r=0,5). La concentration est ajustée à 80 g/l puis la solution est portée 6 heures à 150°C. Après refroidissement, le pH du milieu réactionnel est amené à une valeur de 8,5 à l'aide d'une solution ammoniacale. La température est ensuite portée à 100°C. Après refroidissement, on élimine par décantation les eaux-mères et on ajoute une quantité équivalente d'eau. Le milieu réactionnel est de nouveau porté à 100°C. Après décantation, le surnageant est éliminé, et le produit est séché par atomisation. La calcination du produit est effectuée 2 heures à 600°C.

Après calcination 6 heures à 900°C, 1000°C, et 1100°C, les surfaces spécifiques sont respectivement de 60, 41 et 11 m$^2$/g.

L'analyse en diffraction RX montre que l'oxyde obtenu est sous la forme d'une phase pure solution solide.

EXEMPLE 3

La solution de départ est constituée d'un mélange de nitrate de cérium IV, de nitrate de zirconyle et de nitrate de praséodyme dans des proportions respectives en poids d'oxyde de 19/76/5% (rapport r=0,5). On procède comme dans l'exemple 2. La calcination du produit est effectuée 2 heures à 600°C.

Après calcination 6 heures à 900°C et 1000°C, les surfaces spécifiques sont respectivement de 58 et 33 m$^2$/g.

L'analyse en diffraction RX montre que l'oxyde obtenu est sous la forme d'une phase pure solution solide.

EXEMPLE 4

A une solution de nitrate de CelV, on ajoute une solution de nitrate de zirconyle et de nitrate de néodyme dans les proportions respectives en poids de 19/76/5 (rapport r=0,5). La concentration est ajustée à 80 g/l, puis la solution est portée 6 heures à 150°C. Après refroidissement, le pH du milieu est amené à une valeur de 8,5 à l'aide d'une solution ammoniacale. Le milieu ainsi obtenu est filtré puis calciné 2 heures à 400°C.

Les surfaces spécifiques de l'oxyde ainsi obtenu sont respectivement de 55 et 33 m$^2$/g 6 heures à 900°C et 1000°C.

L'analyse en diffraction RX montre que l'oxyde obtenu est sous la forme d'une phase pure solution solide.

EXEMPLE 5

La solution de départ est constituée d'un mélange de nitrate de cérium IV, de nitrate de zirconyle, de nitrate de lanthane et de nitrate de praséodyme dans des proportions respectives en poids d'oxyde de 18/72/5/5% (rapport r=0,5). On procède comme dans l'exemple 2. La calcination du produit est effectuée 2 heures à 800°C.

Après calcination 6 heures à 900°C, 1000°C et 1100°C, les surfaces spécifiques sont respectivement de 64 ,49 et 13 m$^2$/g.

L'analyse en diffraction RX montre que l'oxyde obtenu est sous la forme d'une phase pure solution solide.

EXEMPLE 6

On précipite une solution d'un mélange de nitrate de CelV, de nitrate de La et d'oxychlorure de Zr, dans des proportions respectives en poids d'oxydes de 17/5/78, à une concentration de 172 g d'oxyde/l par ajout de cette solution sur une solution ammoniacale. Après décantation de la pulpe obtenue, les eaux-mères sont éliminées et on ajoute une quantité équivalente d'eau. On chauffe 1 heure à 100°C. Après décantation et élimination des eaux-mères, on ajoute de nouveau un volume équivalent d'eau, puis la suspension est filtrée. Le gâteau est ensuite calciné 2 heures à 400°C, puis 1 heure à 750°C. Après calcination 6 heures à 900°C et 6 heures à 1000°C, les surfaces spécifiques sont respectivement de 63 et 51 m$^2$/g.

L'analyse en diffraction RX montre que l'oxyde obtenu est sous la forme d'une phase pure solution solide.

**Revendications**

1.  Composition consistant essentiellement en oxyde de zirconium et en oxyde de cérium, **caractérisée en ce qu'**après calcination 6 heures à 1000°C elle possède une surface spécifique supérieure à 25m$^2$/g et elle se présente sous la forme d'une solution solide pure de l'oxyde de cérium dans l'oxyde de zirconium.

2.  Composition à base d'oxyde de zirconium comprenant de l'oxyde de cérium et au moins un élément dopant, **caractérisée en ce qu'**après calcination 6 heures à 1000°C, elle possède une surface spécifique d'au moins 25m$^2$/g et elle se présente sous la forme d'une solution solide pure de l'oxyde de cérium et du dopant dans l'oxyde de zirconium.

3.  Composition selon la revendication 2, **caractérisée en ce qu'**elle possède une surface spécifique d'au moins 30m$^2$/g, plus particulièrement d'au moins

40m$^2$/g, après calcination 6 heures à 1000°C.

**4.** Composition selon la revendication 2 ou 3, **caractérisée en ce qu'**elle possède une surface spécifique d'au moins 50m$^2$/g, plus particulièrement d'au moins 60m$^2$/g après calcination 6 heures à 900°C.

**5.** Composition selon l'une des revendications 2 à 4, **caractérisée en ce que** l'élément dopant est choisi, seul ou en mélange, parmi les terres rares; les alcalino-terreux; l'aluminium; le thorium; le scandium; le gallium; le titane; le niobium; le tantale.

**6.** Composition selon l'une des revendications 2 à 5, **caractérisée en ce que** l'élément dopant est le lanthane et **en ce qu'**elle présente une surface spécifique après calcination 6 heures à 1100°C d'au moins 5m$^2$/g, plus particulièrement d'au moins 10m$^2$/g.

**7.** Composition selon l'une des revendications précédentes, **caractérisée en ce qu'**elle comprend, exprimé sous forme d'oxyde, au moins 40% en poids de zirconium et au plus 60% en poids de cérium.

**8.** Composition selon l'une des revendications 1 à 7, **caractérisée en ce qu'**elle présente un rapport atomique Zr/Ce égal ou supérieur à 1.

**9.** Composition selon l'une des revendications 1 à 8, **caractérisée en ce qu'**elle présente au moins 51% en poids de zirconium et au plus 49% en poids de cérium et plus particulièrement au moins 55% en poids de zirconium et d'au plus 45% en poids de cérium et encore plus particulièrement d'au moins 65% en poids de zirconium et au plus 35% en poids de cérium.

**10.** Composition selon l'une des revendications 2 à 9, **caractérisée en ce qu'**elle comprend, exprimé sous forme d'oxyde entre 0,1 et 50 % en poids, notamment entre 0,1 et 45 % en poids, plus particulièrement entre 0,1 et 20% en poids d'un élément dopant.

**11.** Composition selon l'une des revendications 1 à 10, **caractérisée en ce qu'**elle comprend, exprimé sous forme d'oxyde, 0,01 à 25% en poids d'hafnium.

**12.** Procédé de préparation d'une composition selon l'une des revendications précédentes, **caractérisé en ce qu'**il comprend les étapes suivantes :

- on prépare un mélange en milieu liquide contenant un composé du zirconium et un composé du cérium IV;
- on chauffe ledit mélange à une température supérieure à 100°C;
- on amène le milieu réactionnel obtenu à l'issue du chauffage à un pH basique;
- on effectue un mûrissement à une température d'au moins 100°C soit du milieu réactionnel précité, soit d'une suspension obtenue après remise dans l'eau du précipité issu dudit milieu réactionnel, le mûrissement étant effectué à un pH supérieur à 8;
- on récupère le précipité ainsi obtenu à l'issue du mûrissement;
- on calcine ledit précipité;

l'élément dopant précité étant, le cas échéant, ajouté soit au mélange en milieu liquide de départ soit au mélange réactionnel obtenu à l'issue du chauffage.

**13.** Procédé selon la revendication 12, **caractérisé en ce qu'**on utilise comme composés du zirconium et du cérium le nitrate de zirconyle ou le chlorure de zirconyle et le nitrate de cérium ou le nitrate céri-ammoniacal.

**14.** Procédé selon l'une des revendications 12 ou 13, **caractérisé en ce qu'**on ajoute un composé basique au mélange en milieu liquide précité afin de limiter l'acidité libre dudit mélange.

**15.** Procédé de préparation d'une composition selon l'une des revendications 1 à 11, **caractérisé en ce qu'**il comprend les étapes suivantes :

- on prépare un mélange en milieu liquide contenant un composé du cérium et au moins un oxychlorure de zirconium et, le cas échéant un composé de l'élément dopant;
- on met en présence ledit mélange et un composé basique, ce par quoi on fait précipiter le mélange;
- on effectue un mûrissement à une température d'au moins 100°C soit du milieu réactionnel obtenu à l'étape précédente, soit d'une suspension obtenue après remise dans l'eau du précipité issu dudit milieu réactionnel;
- on récupère le précipité ainsi obtenu à l'issue du mûrissement;
- on calcine ledit précipité.

**16.** Procédé selon la revendication 15, **caractérisé en ce qu'**on utilise un composé de cérium IV.

**17.** Procédé selon la revendication 15 ou 16, **caractérisé en ce qu'**on utilise comme composé du cérium le nitrate de cérium ou le nitrate céri-ammoniacal.

**18.** Revêtement à propriétés catalytiques, **caractérisé en ce qu'**il comprend une composition selon l'une des revendications 1 à 11 sur un support du type alumine, oxyde de titane, oxyde de cérium, oxyde de zirconium, silice, spinelles, zéolites, silicates, phosphates de silicoaluminium cristallins, phosphates d'aluminium cristallins.

19. Système catalytique **caractérisé en ce qu'**il comprend un revêtement à base d'une composition selon l'une des revendications 1 à 11 sur un substrat.

20. Utilisation d'une composition selon l'une des revendications 1 à 11 ou d'un système catalytique selon la revendication 19, au traitement de gaz d'échappement des moteurs à combustion interne.


## Claims

1. A composition consisting essentially of zirconium oxide and cerium oxide, **characterized in that** after calcining for 6 hours at 1000°C, it has a specific surface area of more than 25 m$^2$/g and is in the form of a pure solid solution of cerium oxide in zirconium oxide.

2. A composition based on zirconium oxide comprising cerium oxide and at least one doping element, **characterized in that** after calcining for 6 hours at 1000°C, it has a specific surface area of at least 25 m$^2$/g and is in the form of a pure solid solution of cerium oxide and dopant in zirconium oxide.

3. A composition according to claim 2, **characterized in that** it has a specific surface area of at least 30 m$^2$/g, more particularly at least 40 m$^2$/g after calcining for 6 hours at 1000°C.

4. A composition according to claim 2 or claim 3, **characterized in that** it has a specific surface area of at least 50 m$^2$/g, more particularly at least 60 m$^2$/g after calcining for 6 hours at 900°C.

5. A composition according to one of claims 2 to 4, **characterized in that** the doping element is selected, alone or as a mixture, from the rare earths; the alkaline-earths; aluminium; thorium; scandium; gallium; titanium; niobium; and tantalum.

6. A composition according to one of claims 2 to 5, **characterized in that** the doping element is lanthanum and **in that** it has a specific surface area after calcining for 6 hours at 1100°C of at least 6 m$^2$/g, more particularly at least 10 m$^2$/g.

7. A composition according to one of the preceding claims, **characterized in that** it comprises, expressed as the oxide form, at least 40% by weight of zirconium and at most 60% by weight of cerium.

8. A composition according to one of claims 1 to 7, **characterized in that** it has a Zr/Ce atomic ratio of 1 or more.

9. A composition according to one of claims 1 to 8, **characterized in that** it has at least 51% by weight of zirconium and at most 49% by weight of cerium, more particularly at least 55% by weight of zirconium and at most 45% by weight of cerium, still more particularly at least 65% by weight of zirconium and at most 35% by weight of cerium.

10. A composition according to one of claims 2 to 9, **characterized in that** it comprises, expressed as the oxide form, in the range 0.1% to 50% by weight, in particular in the range 0.1% to 45% by weight, more particularly in the range 0.1% to 20% by weight of a doping element.

11. A composition according to one of claims 1 to 10, **characterized in that** it comprises, expressed as the oxide form, 0.01% to 25% by weight of hafnium.

12. A process for preparing a composition according to one of the preceding claims, **characterized in that** it comprises the following steps:

   • preparing a mixture in a liquid medium containing a zirconium compound and a cerium IV compound;
   • heating said mixture to a temperature of more than 100°C;
   • bringing the reaction medium obtained after heating to a basic pH;
   • ageing, at a temperature of at least 100°C, either said reaction medium or a suspension obtained after taking up the precipitate from said reaction medium in water, ageing being carried out at a pH of more than 8;
   • recovering the precipitate obtained after ageing;
   • calcining said precipitate;

   said doping element being added, if appropriate; either to the mixture in the starting liquid medium or to the reaction mixture obtained after heating.

13. A process according to claim 12, **characterized in that** the zirconium and cerium compounds used are zirconyl nitrate or zirconyl chloride and cerium nitrate or ceriammoniacal nitrate.

14. A process according to claim 12 or claim 13, **characterized in that** a basic compound is added to said mixture in a liquid medium to limit the free acidity of said mixture.

15. A process for preparing a composition according to one of claims 1 to 11, **characterized in that** it comprises the following steps:

- preparing a mixture in a liquid medium containing a cerium compound and at least one zirconium oxychloride and, if appropriate, a doping element compound;
- bringing said mixture into the presence of a basic compound to precipitate out the mixture;
- ageing, at a temperature of at least 100°C, either the reaction medium obtained in the preceding step, or a suspension obtained after taking up the precipitate from said reaction medium in water;
- recovering the precipitate obtained after ageing;
- calcining said precipitate.

16. A process according to claim 15, **characterized in that** a cerium IV compound is used.

17. A process according to claim 15 or claim 16, **characterized in that** the cerium compound is cerium nitrate or cert-ammoniacal nitrate.

18. A coating with catalytic properties, **characterized in that** it comprises a composition according to one of claims 1 to 11 on an alumina, titanium oxide, cerium oxide, zirconium oxide, silica, spinel, zeolite, silicate, crystalline silicoaluminium phosphate or crystalline aluminium phosphate type support.

19. A catalytic system, **characterized in that** it comprises a coating based on a composition according to one of claims 1 to 11 on a substrate.

20. Use of a composition according to one of claims 1 to 11 or a catalytic system according to claim 19, for the treatment of exhaust gas from internal combustion engines.


**Patentansprüche**

1. Zusammensetzung, die im Wesentlichen aus Zirkoniumoxid und aus Ceroxid besteht, **dadurch gekennzeichnet, dass** diese nach Kalzinierung für 6 Stunden bei 1000°C eine spezifische Oberfläche über 25 m$^2$/g besitzt und dass diese in Form einer reinen festen Lösung des Ceroxids in dem Zirkoniumoxid vorliegt.

2. Zusammensetzung auf der Basis von Zirkoniumoxid, welche Ceroxid und wenigstens ein Dotierungselement umfasst, **dadurch gekennzeichnet, dass** diese nach Kalzinierung für 6 Stunden bei 1000°C eine spezifische Oberfläche von wenigstens 25 m$^2$/g besitzt und dass diese in Form einer reinen festen Lösung des Ceroxids und des Dotierungsmittels in dem Zirkoniumoxid vorliegt.

3. Zusammensetzung nach Anspruch 2, **dadurch gekennzeichnet, dass** diese eine spezifische Oberfläche von wenigstens 30 m$^2$/g, insbesondere wenigstens 40 m$^2$/g, nach Kalzinierung für 6 Stunden bei 1000°C besitzt.

4. Zusammensetzung nach Anspruch 2 oder 3, **dadurch gekennzeichnet, dass** diese eine spezifische Oberfläche von wenigstens 50 m$^2$/g, insbesondere wenigstens 60 m$^2$/g, nach Kalzinierung für 6 Stunden bei 900°C besitzt.

5. Zusammensetzung nach einem der Ansprüche 2 bis 4, **dadurch gekennzeichnet, dass** das Dotierungselement, allein oder in einer Mischung, ausgewählt ist aus den Seltenerdelementen; den Erdalkalimetallen; Aluminium; Thorium; Scandium; Gallium; Titan; Niob; Tantal.

6. Zusammensetzung nach einem der Ansprüche 2 bis 5, **dadurch gekennzeichnet, dass** das Dotierungselement Lanthan ist und dass dieses eine spezifische Oberfläche nach Kalzinierung für 6 Stunden bei 1100°C von wenigstens 5 m$^2$/g, insbesondere wenigstens 10 m$^2$/g aufweist.

7. Zusammensetzung nach einem der vorhergehenden Ansprüche, **dadurch gekennzeichnet, dass** diese in Form des Oxids wenigstens 40 Gew.-% Zirkonium und höchstens 60 Gew.-% Cer umfasst.

8. Zusammensetzung nach einem der Ansprüche 1 bis 7, **dadurch gekennzeichnet, dass** diese ein Atomverhältnis von Zr/Ce gleich oder größer als 1 aufweist.

9. Zusammensetzung nach einem der Ansprüche 1 bis 8, **dadurch gekennzeichnet, dass** diese wenigstens 51 Gew.-% Zirkonium und höchstens 49 Gew.-% Cer und insbesondere wenigstens 55 Gew.-% Zirkonium und höchstens 45 Gew.-% Cer und noch bevorzugter wenigstens 65 Gew.-% Zirkonium und höchstens 35 Gew.-% Cer aufweist.

10. Zusammensetzung nach einem der Ansprüche 2 bis 9, **dadurch gekennzeichnet, dass** diese in Form des Oxids zwischen 0,1 und 50 Gew.-%, insbesondere zwischen 0,1 und 45 Gew.-%, noch bevorzugter zwischen 0,1 und 20 Gew.-% eines Dotierungselements umfasst.

11. Zusammensetzung nach einem der Ansprüche 1 bis 10, **dadurch gekennzeichnet, dass** diese in Form des Oxids 0,01 bis 25 Gew.-% Hafnium umfasst.

**12.** Verfahren zur Herstellung einer Zusammensetzung nach einem der vorhergehenden Ansprüche, **dadurch gekennzeichnet, dass** dieses die folgenden Schritte umfasst:

- man stellt in flüssigem Milieu eine Mischung her, welche eine Zirkoniumverbindung und eine Cer(IV)-Verbindung umfasst;

- man erhitzt die genannte Mischung auf eine Temperatur über 100°C;

- man stellt das nach Ende des Erhitzens erhaltene Reaktionsmilieu auf einen basischen pH ein;

- man bewirkt eine Reifung bei einer Temperatur von wenigstens 100°C entweder des vorher genannten Reaktionsmilieus oder einer Suspension, die nach Rückführung in Wasser des aus dem genannten Reaktionsmilieu entstandenen Niederschlags erhalten wird, wobei die Reifung bei einem pH über 8 durchgeführt wird;

- man gewinnt den so am Ende der Reifung erhaltenen Niederschlag;

- man kalziniert den genannten Niederschlag;

wobei das vorher erwähnte Dotierungselement gegebenenfalls entweder zu der Mischung in flüssigem Milieu am Anfang oder zu der Reaktionsmischung, die am Ende des Heizens erhalten wurde, zugefügt wird.

**13.** Verfahren nach Anspruch 12, **dadurch gekennzeichnet, dass** man als Zirkonium- und als Cer-Verbindung das Zirkoniumnitrat oder das Zirkoniumchlorid und das Cernitrat oder das Cerammoniumnitrat verwendet.

**14.** Verfahren nach einem der Ansprüche 12 oder 13, **dadurch gekennzeichnet, dass** man zu der vorher erwähnten Mischung in flüssigem Milieu eine basische Verbindung zufügt, um den Gehalt an freier Säure in der genannten Mischung zu begrenzen.

**15.** Verfahren zur Herstellung einer Zusammensetzung nach einem der Ansprüche 1 bis 11, **dadurch gekennzeichnet, dass** dieses die folgenden Schritte umfasst:

- man stellt eine Mischung in flüssigem Milieu her, welche eine Cer-Verbindung und wenigstens ein Zirkoniumoxychlorid und gegebenenfalls eine Verbindung des Dotierungselements enthält;

- man bringt die genannte Mischung mit einer basischen Verbindung in Kontakt, wodurch man die Mischung ausfällt;

- man bewirkt eine Reifung bei einer Temperatur von wenigstens 100°C, entweder des im vorhergehenden Schritt erhaltenen Reaktionsmilieus oder Suspension, die nach Rückführung in Wasser des aus dem genannten Reaktionsmilieu entstandenen Niederschlags erhalten wird;

- man gewinnt den so am Ende der Reifung erhaltenen Niederschlag;

- man kalziniert den genannten Niederschlag.

**16.** Verfahren nach Anspruch 15, **dadurch gekennzeichnet, dass** man eine Cer(IV)-Verbindung verwendet.

**17.** Verfahren nach Anspruch 15 oder 16, **dadurch gekennzeichnet, dass** man als Cer-Verbindung das Cernitrat oder das Cerammoniumnitrat verwendet.

**18.** Belag mit katalytischen Eigenschaften, **dadurch gekennzeichnet, dass** dieser eine Zusammensetzung nach einem der Ansprüche 1 bis 11 auf einem Träger vom Typ Aluminiumoxid, Titanoxid, Ceroxid, Zirkoniumoxid, Silica, Spinelle, Zeolithe, Silicate, kristalline Siliciumaluminiumphosphate, kristalline Aluminiumphosphate umfasst.

**19.** Katalytisches System, **dadurch gekennzeichnet, dass** dieses einen Belag auf der Basis einer Zusammensetzung nach einem der Ansprüche 1 bis 11 auf einem Substrat umfasst.

**20.** Verwendung einer Zusammensetzung nach einem der Ansprüche 1 bis 11 oder eines katalytischen Systems nach Anspruch 19 bei der Behandlung von Auspuffgas von Verbrennungsmotoren.